# EUROPEAN PATENT SPECIFICATION

(11) **EP 2 840 568 B1**
(45) Date of publication and mention of the grant of the patent: **08.06.2022**
(21) Application number: 13181360.2
(22) Date of filing: 22.08.2013
(51) Int. Cl.: G10K 11/178, B60N 2/879

(54) **Acoustically active head rest**
Akustisch wirksame Kopfstütze
Appuie-tête actif sur le plan acoustique

(43) Date of publication of application: 25.02.2015
(73) Proprietor: Harman Becker Automotive Systems GmbH, 76307 Karlsbad (DE)
(72) Inventor: Christoph, Markus, 94315 Straubing (DE); Pfaffinger, Gerhard, 93053 Regensburg (DE); Scholz, Leander, 94330 Salching (DE)
(74) Representative: Westphal, Mussgnug & Partner, Patentanwälte mbB

(56) References cited:
- EP-A1- 1 577 879
- WO-A1-00/14722
- WO-A1-94/02935
- GB-A- 2 360 900
- US-A1- 2010 104 110
- Marek Pawelczyk: "Adaptive noise control algorithms for active headrest system", CONTROL ENGINEERING PRACTICE., vol. 12, no. 9, 1 September 2004 (2004-09-01), pages 1101-1112, XP055678051, GB ISSN: 0967-0661, DOI: 10.1016/j.conengprac.2003.11.006

## Description

### TECHNICAL FIELD

The disclosure relates to a system for processing a signal, in particular to an acoustically active headrest.

### BACKGROUND

When used in user-related applications, microphones should be positioned as close as possible to the user's head to provide superior acoustic properties. However, many environments such as, e.g., the interiors of vehicles hardly or even do not at all allow positioning of the microphone close to the head. In some applications, the microphone is therefore mounted onto a flexible arm, hinged holder, rigid boom, pivotable or extendable wing or the like, extending into the direction of the user, but such arrangements are inconvenient and may bear significant risk of user injury, particularly in the case of a vehicle crash. Increased acoustic properties without deteriorating convenience and safety are desirable.

In Document GB 2 360 900 A, an apparatus for reducing noise in a vehicle is disclosed, using a laser and interferometer. The interferometer is disposed in a headrest to measure the sound proximate to the drivers ears. The transducers used can be the ears of the driver, which can be painted with pressure sensitive paint or some kind of sensor attached to the ear. An equal and opposite sound is generated and transmitted to the ear by loudspeakers, which are also disposed in the headrest, hence reducing the noise audible to the driver. A microphone may be provided to make a separate measurement of the background noise to facilitate in noise reduction. Document US 2010/014110 A1 discloses a noise reduction system to be used in a closed structure such as an airplane or a train. The system comprises a microphone for detecting noise emitted from a noise source, a noise controller for generating control sound signal to reduce noise detected by the microphone based on information from the microphone, and a speaker for outputting control sound based on control sound signal from the noise controller. A plurality of microphones and speakers are arranged for each seat, and a plurality of microphones are arranged in higher density for each seat in a specific direction.

### SUMMARY

An acoustically active headrest comprises a headrest body with a front surface configured to support a user's head, thereby defining preferential positions of the user's ears, and a microphone that has a maximum sensitivity to sounds from a principal receiving direction and that is integrated into the front surface of the headrest body such that the principal receiving direction intersects with one of the preferential positions of the user's ears. The headrest further comprises a loudspeaker integrated into the headrest body, wherein the loudspeaker has a principal transmitting direction into which it radiates maximum sound energy, the loudspeaker being arranged such that its principal transmitting direction is at an angle greater than 30 degrees from the principal receiving direction of the microphone related to one of the preferential positions. The front surface of the headrest has an inward-curving shape extending partly around the longitudinal axis of the user's head. The inward-curving shape has two planar end sections and an intermediate section, the end sections being arranged at an angle of 10 to 50 degrees from the intermediate section. The microphone is arranged at the periphery of one of the two planar ends.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.

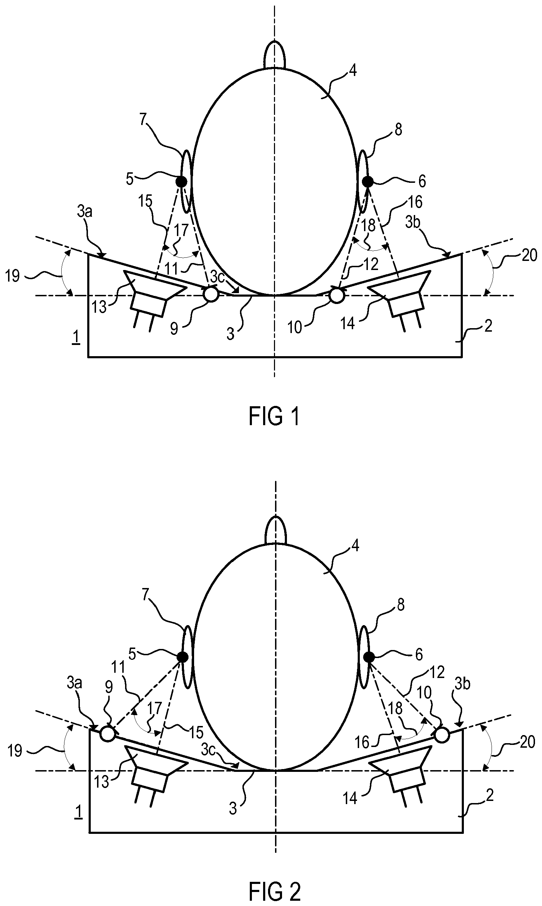

Figure 1 is a schematic diagram of an exemplary headrest, not forming part of the invention, into which microphones and loudspeakers are integrated side by side in the front surface of the headrest, the microphones being arranged towards the center of the headrest and the loudspeakers being arranged towards the periphery of the headrest.
Figure 2 is a schematic diagram of an exemplary headrest, according to the invention, into which microphones and loudspeakers are integrated side by side in the front surface of the headrest, the microphones being arranged towards the periphery of the headrest and the loudspeakers being arranged towards the center of the headrest.

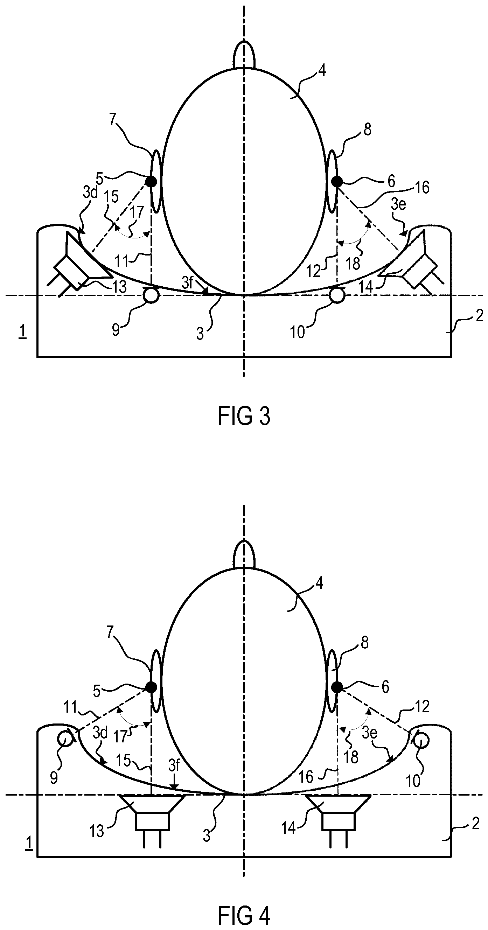

Figure 3 is a schematic diagram of an exemplary headrest, not forming part of the invention, into which microphones and loudspeakers are integrated in the concave-shaped rounded front surface of the headrest, the microphones being arranged towards the center of the headrest and the loudspeakers being arranged towards the periphery of the headrest and elevated with regard to the microphones.
Figure 4 is a schematic diagram of an exemplary headrest, not forming part of the invention, into which microphones and loudspeakers are integrated in the concave-shaped rounded front surface of the headrest, the loudspeakers being arranged towards the center of the headrest and the microphones being arranged towards the periphery of the headrest and elevated with regard to the loudspeakers.

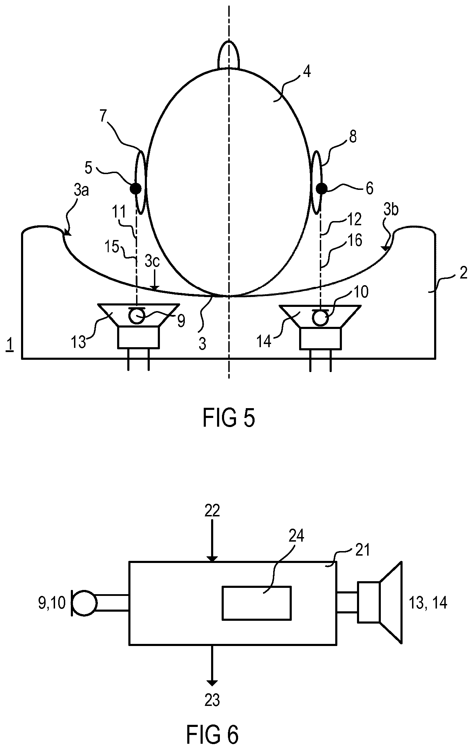

Figure 5 is a schematic diagram of an exemplary headrest, not forming part of the invention, into which microphones and loudspeakers are integrated in the concave-shaped rounded front surface of the headrest, the microphones being arranged at the front side of the loudspeakers.
Figure 6 is a block diagram of an exemplary evaluation circuit applicable in connection with the headrests of Figures 1-5.

### DETAILED DESCRIPTION OF THE PREFERRED EMBODIMENTS

Reference is now made to Figure 1, which depicts an exemplary headrest 1, not forming part of the invention, in a sectional illustration. Headrest 1 may have a cover and one or more structural elements that form headrest body 2. Headrest 1 may comprise a pair of support pillars (not shown) that engage the top of a vehicle seat (not shown) and may be movable up and down by way of a mechanism integrated into the seat. Headrest body 2 has front surface 3 that supports user's head 4, thereby defining preferential positions 5 and 6 of user's ears 7 and 8. Preferential positions are where the respective ear is at or close to this particular position most of the time (>50%) during intended use.

Two unidirectional microphones 9 and 10, i.e., microphones that have a maximum sensitivity to sounds from principal receiving directions 11 and 12, are integrated into front surface 3 of headrest body 2, whereby principal receiving directions 11 and 12 intersect with one of preferential positions 5 and 6 of user's ears 7 and 8, respectively. Headrest 1 further includes two loudspeakers 13 and 14 integrated into headrest body 2. Loudspeakers 13 and 14 each have principal transmitting directions 15, 16 into which they radiate maximum sound energy. Headrest 1 has at its surface 3 an inward-curving (concave) shape with two planar end sections 3a, 3b and a planar intermediate section 3c in which the end sections are folded inwards by angles 19 and 20, respectively, of about 30 degrees, but other angle between 10 and 50 degrees is applicable as well. In each of the end sections, one of microphones 9 and 10 and one of loudspeakers 13 and 14 are positioned. In headrest 1 of Figure 1, loudspeakers 13 and 14 are arranged closer to the outer periphery of surface 3 than microphones 9 and 10. Loudspeakers 13 and 14 are arranged such that their principal transmitting directions 15 and 16 each have one of angles 17 and 18 at preferential positions 5 and 6 of greater than 30 degrees with regard to the respective principal receiving directions of microphones 9 and 10.

Headrest 1 according to the invention, shown in Figure 2, is similar to headrest 1 of Figure 1, however, the microphone positions and loudspeaker positions have been reversed and all positions have been shifted towards the outer peripheries of planar end sections 3a and 3b of front surface 3. Loudspeakers 13 and 14 are arranged such that their principal transmitting directions 15 and 16 have angles 17 and 18 at preferential positions 5 and 6 of greater than 30 degrees with regard to the respective principal receiving direction of microphones 9 and 10.

Headrest 1 shown in Figure 3, not forming part of the invention, is similar to headrest 1 of Figure 1, however, front surface 3 of the headrest has an inward-curving, rounded shape extending much further around the longitudinal axis of head 4, and it has curved end sections 3d and 3e and a curved intermediate section 3f. Loudspeakers 13 and 14 are arranged in peripheral sections 3d and 3e of headrest 1 and thus have a more laterally protruding level from intermediate section 3f of surface 3 than in the previous examples. Microphones 9 and 10 are positioned approximately right behind user's ears 7 and 8. Accordingly, loudspeakers 13 and 14 are arranged such that their principal transmitting directions 15 and 16 have angles 17 and 18 at preferential positions 5 and 6 of greater than 45 degrees with regard to the respective principal receiving direction of microphones 9 and 10.

Headrest 1 shown in Figure 4, not forming part of the invention, 4- is similar to headrest 1 of Figure 3, however, the microphone positions and loudspeaker positions are reversed and the positions of the microphones have been shifted towards the outer peripheries of curved end sections 3d and 3e of front surface 3.

Headrest 1 shown in Figure 5, not forming part of the invention, is similar to headrest 1 of Figure 4, however, the microphone positions are now close to the loudspeaker positions at the loudspeakers' front sides.

As shown in Figure 6, microphones 9 and 10 and loudspeakers 13 and 14 may be electrically connected to evaluation circuit 21, which may receive at least one audio input signal 22 and provide at least one audio output signal 23. Evaluation circuit 21 may include or implement the functionality of at least one of the following: active noise control, dynamic equalization control, engine order compensation, road noise compensation, automatic loudness control, room-dependent adaptive timbre control, sound zone control, surround sound processing, hands-free telephony, acoustic echo cancellation, microphone beamforming, loudspeaker beamforming, speech or music cancellation and in-car communication.

In the exemplary system of Figure 6, evaluation circuit 21 may include filter 24 configured to compensate for the transfer function between preferential positions 5 and 6 and microphones 9 and 10, respectively, so that the microphones are virtually located at preferential positions 5 and 6. Filter 24 may have a fixed transfer characteristic or be adaptive. It may be implemented as an analog or digital circuit or in software. Filter 21 may have a transfer function that is inverse of the transfer function between preferential positions 5 and 6 and microphones 9 and 10, respectively.

The numbers m, 1 (m, 1 ≥ 1) of microphones and loudspeakers can be identical or different.

It should be noted and understood that there can be improvements and modifications made of the present invention described above without departing from the scope of the invention as set forth in the accompanying claims.

## Claims

1. An acoustically active headrest (1) comprising:
a headrest body (2) with a front surface (3) configured to support a user's head, thereby defining preferential positions of the user's ears;
a microphone (9, 10) that has a maximum sensitivity to sounds from a principal receiving direction and that is integrated in the front surface (3) of the headrest body (2) such that the principal receiving direction intersects with one of the preferential positions of the user's ears; and
a loudspeaker (13, 14) integrated into the headrest body (2), wherein the loudspeaker (13, 14) has a principal transmitting direction into which it radiates maximum sound energy, the loudspeaker (13, 14) being arranged such that its principal transmitting direction is at an angle greater than 30 degrees from the principal receiving direction of the microphone (9, 10) related to one of the preferential positions,
wherein the front surface (3) of the headrest (1) has an inward-curving shape extending partly around the longitudinal axis of the user's head,
wherein the inward-curving shape has two planar end sections (3a, 3b) and an intermediate section (3f),
**characterised in that**
J the end sections (3a, 3b) are arranged at an angle of 10 to 50 degrees from the intermediate section (3f), and
the microphone (9, 10) is arranged at the periphery of one of the two planar ends (3a, 3b).

2. The headrest (1) of claim 1, wherein the loudspeaker (13, 14) is arranged in one of the two planar ends (3a, 3b).

3. The headrest (1) of claim 1 or 2, wherein the microphone (9, 10) and the loudspeaker (13, 14) are electrically connected to an evaluation circuit (21).

4. The headrest (1) of claim 3, wherein the evaluation circuit (21) is configured to provide at least one of active noise control, dynamic equalization control, engine order compensation, road noise compensation, automatic loudness control, room-dependent adaptive timbre control, sound zone control, surround sound processing, hands-free telephony, acoustic echo cancellation, microphone (9, 10) beamforming, loudspeaker beamforming, speech or music cancellation and in-car communication.

5. The headrest (1) of claim 3 or 4, wherein the evaluation circuit (21) comprises a filter (24) configured to compensate for the transfer function between the preferential position and the microphone (9, 10).

6. The headrest (1) of any of claims 1-5, wherein at least one additional microphone (9, 10) is arranged in the headrest body (2), the additional microphone (9, 10) having a maximum sensitivity to sounds from a principal receiving direction and being integrated into the front surface (3) of the headrest body (2) such that the principal receiving direction intersects with one of the preferential positions of the user's ears.

7. The headrest (1) of any of claims 1-6, wherein at least one additional loudspeaker (13, 14) is arranged in the headrest body (2).

## Patentansprüche

1. Akustisch wirksame Kopfstütze (1), umfassend:
einen Kopfstützenkörper (2) mit einer vorderen Oberfläche (3), die konfiguriert ist, um den Kopf eines Benutzers zu stützen, wodurch bevorzugte Positionen der Ohren des Benutzers definiert werden;
ein Mikrofon (9, 10), das eine maximale Empfindlichkeit gegenüber Tönen aus einer Hauptempfangsrichtung aufweist und das so in die vordere Oberfläche (3) des Kopfstützenkörpers (2) integriert ist, dass die Hauptempfangsrichtung eine der bevorzugten Positionen der Ohren des Benutzers schneidet; und
einen in den Kopfstützenkörper (2) integrierten Lautsprecher (13, 14), wobei der Lautsprecher (13, 14) eine Hauptübertragungsrichtung aufweist, in die er maximale Schallenergie abstrahlt, wobei der Lautsprecher (13, 14) so angeordnet ist, dass seine Hauptübertragungsrichtung bezogen auf eine der bevorzugten Positionen in einem Winkel von über 30 Grad zur Hauptempfangsrichtung des Mikrofons (9, 10) liegt,
wobei die vordere Oberfläche (3) der Kopfstütze (1) eine nach innen gekrümmte Form aufweist, die sich teilweise um die Längsachse des Kopfes des Benutzers erstreckt,
wobei die nach innen gekrümmte Form zwei ebene Endabschnitte (3a, 3b) und einen Zwischenabschnitt (3f) aufweist,
**dadurch gekennzeichnet, dass**
die Endabschnitte (3a, 3b) in einem Winkel von 10 bis 50 Grad zum Zwischenabschnitt (3f) angeordnet sind und
das Mikrofon (9, 10) am Umfang eines der beiden ebenen Enden (3a, 3b) angeordnet ist.

2. Kopfstütze (1) nach Anspruch 1, **dadurch gekennzeichnet, dass** der Lautsprecher (13, 14) in einem der beiden ebenen Enden (3a, 3b) angeordnet ist.

3. Kopfstütze (1) nach Anspruch 1 oder 2, wobei das Mikrofon (9, 10) und der Lautsprecher (13, 14) elektrisch mit einer Auswerteschaltung (21) verbunden sind.

4. Kopfstütze (1) nach Anspruch 3, wobei die Auswerteschaltung (21) konfiguriert ist, um mindestens eines aus wirksamer Geräuschsteuerung, dynamischer Entzerrungssteuerung, Motorordnungskompensation, Straßengeräuschkompensation, automatischer Lautstärkeregelung, raumabhängiger adaptiver Klangfarbensteuerung, Klangzonensteuerung, Raumklangverarbeitung, Freisprechtelefonie, Akustikecho-Unterdrückung, Richtcharakteristikformung des Mikrofons (9, 10), Formung der Lautsprecher-Richtcharakteristik, Sprach- oder Musikunterdrückung und Kommunikation im Fahrzeuginnenraum bereitzustellen.

5. Kopfstütze (1) nach Anspruch 3 oder 4, wobei die Auswerteschaltung (21) ein Filter (24) umfasst, das zum Kompensieren der Übertragungsfunktion zwischen der bevorzugten Position und dem Mikrofon (9, 10) ausgebildet ist.

6. Kopfstütze (1) nach einem der Ansprüche 1 bis 5, wobei mindestens ein zusätzliches Mikrofon (9, 10) in dem Kopfstützenkörper (2) angeordnet ist, wobei das zusätzliche Mikrofon (9, 10) eine maximale Empfindlichkeit gegenüber Geräuschen aus einer Hauptempfangsrichtung aufweist und derart in die vordere Oberfläche (3) des Kopfstützenkörpers (2) integriert ist, dass die Hauptempfangsrichtung eine der bevorzugten Positionen der Ohren des Benutzers schneidet.

7. Kopfstütze (1) nach einem der Ansprüche 1 bis 6, wobei mindestens ein zusätzlicher Lautsprecher (13, 14) im Kopfstützenkörper (2) angeordnet ist.

## Revendications

1. Appuie-tête actif sur le plan acoustique (1) comprenant :
un corps d'appuie-tête (2) avec une surface avant (3) configurée pour supporter la tête d'un utilisateur, définissant ainsi des positions préférentielles des oreilles de l'utilisateur ;
un microphone (9, 10) qui a une sensibilité maximale aux sons provenant d'une direction de réception principale et qui est intégré dans la surface avant (3) du corps d'appuie-tête (2) de sorte que la direction de réception principale croise l'une des positions préférentielles des oreilles de l'utilisateur ; et
un haut-parleur (13, 14) intégré dans le corps d'appuie-tête (2), dans lequel le haut-parleur (13, 14) a une direction de transmission principale dans laquelle il rayonne une énergie sonore maximale, le haut-parleur (13, 14) étant agencé de sorte que sa direction de transmission principale est à un angle supérieur à 30 degrés par rapport à la direction de réception principale du microphone (9, 10) par rapport à l'une des positions préférentielles,
dans lequel la surface avant (3) de l'appuie-tête (1) a une forme courbée vers l'intérieur s'étendant partiellement autour de l'axe longitudinal de la tête de l'utilisateur,
dans lequel la forme incurvée vers l'intérieur a deux sections d'extrémité planes (3a, 3b) et une section intermédiaire (3f),
**caractérisé en ce que**
les sections d'extrémité (3a, 3b) sont disposées selon un angle de 10 à 50 degrés par rapport à la section intermédiaire (3f), et
le microphone (9, 10) est disposé à la périphérie de l'une des deux extrémités planes (3a, 3b).

2. Appuie-tête (1) selon la revendication 1, dans lequel le haut-parleur (13, 14) est disposé dans l'une des deux extrémités planes (3a, 3b).

3. Appuie-tête (1) selon la revendication 1 ou 2, dans lequel le microphone (9, 10) et le haut-parleur (13, 14) sont reliés électriquement à un circuit d'évaluation (21).

4. Appuie-tête (1) selon la revendication 3, dans lequel le circuit d'évaluation (21) est configuré pour fournir au moins l'un parmi le contrôle actif du bruit, le contrôle d'égalisation dynamique, la compensation de commande du moteur, la compensation du bruit de la route, le contrôle automatique du volume, le contrôle adaptatif du timbre en fonction de la pièce, le contrôle de la zone sonore, le traitement du son surround, la téléphonie mains libres, l'annulation d'écho acoustique, la formation de faisceaux de microphone (9, 10), la formation de faisceaux de haut-parleurs, la suppression des signaux vocaux ou de la musique et la communication embarquée.

5. Appuie-tête (1) selon la revendication 3 ou 4, dans lequel le circuit d'évaluation (21) comprend un filtre (24) configuré pour compenser la fonction de transfert entre la position préférentielle et le microphone (9, 10).

6. Appuie-tête (1) selon l'une quelconque des revendications 1 à 5, dans lequel au moins un microphone (9, 10) supplémentaire est agencé dans le corps d'appuie-tête (2), le microphone (9, 10) supplémentaire ayant une sensibilité maximale aux sons provenant d'une direction de réception principale et étant intégré à la surface avant (3) du corps d'appuie-tête (2) de sorte que la direction de réception principale croise l'une des positions préférentielles des oreilles de l'utilisateur.

7. Appuie-tête (1) selon l'une quelconque des revendications 1 à 6, dans lequel au moins un haut-parleur (13, 14) supplémentaire est agencé dans le corps d'appuie-tête (2).
